# EUROPEAN PATENT SPECIFICATION

(11) **EP 3 049 675 B1**
(45) Date of publication and mention of the grant of the patent: **02.06.2021**
(21) Application number: 14846293.0
(22) Date of filing: 19.09.2014
(51) Int. Cl.: F04C 15/00, F01C 21/10, B01D 35/02, B01D 35/147, F04D 13/08, F04C 2/10, F04C 13/00, F04C 14/24, F04C 15/06, F04D 13/06, F04D 29/70

(54) **SUBMERSIBLE PUMPING APPARATUS WITH INTEGRATED FILTER AND SEALED CIRCUITRY**
TAUCHFÄHIGE PUMPENVORRICHTUNG MIT INTEGRIERTEM FILTER UND ABGEDICHTETER SCHALTUNG
APPAREIL DE POMPAGE SUBMERSIBLE AYANT UN FILTRE INTÉGRÉ ET UN CIRCUIT SCELLÉ

(30) Priority: 20.09.2013 US 201361880693 P; 20.09.2013 US 201361880702 P
(43) Date of publication of application: 03.08.2016
(73) Proprietor: GHSP, INC., Grand Haven, MI 49417 (US)
(72) Inventor: ROSINSKI, Ryan David, Grand Haven, Michigan 49417 (US)
(74) Representative: Boult Wade Tennant LLP
(86) International application number: PCT/US2014/056567
(87) International publication number: WO 2015/042404

(56) References cited:
- EP-A2- 1 302 704
- WO-A1-2013/125339
- WO-A2-2012/130225
- RU-C1- 2 027 031
- RU-C1- 2 122 653
- US-A- 3 973 871
- US-B2- 7 556 479

## Description

### FIELD OF THE INVENTION

The present invention generally relates to a pumping apparatus that may be submersed in a fluid compartment, such as a transmission fluid reservoir, and more particularly to a pumping apparatus that has an integrated filter for filtering the displaced transmission fluid and a fluidly sealed circuit board for operating the pumping apparatus.

### BACKGROUND OF THE INVENTION

Many factors drive vehicle design, including increasing gas mileage standards and a desire to maintain or increase performance capability. As engine space for vehicles becomes more constricted, many challenges are presented to improve engine performance while adhering to the space constraints in vehicle engine compartments. For instance, auxiliary pumps can be difficult to find adequate mounting space in an engine compartment, along with the typically separately housed filters for such pumps and the circuitry for operating the pumps. Along with space constraints, circuitry is usually mounted away from the pumps and the fluid reservoirs to prevent liquid contamination.

WO 2012/130225 A2 discloses a drive unit for a submerged oil pump comprising a housing, a motor compartment enclosed by the housing and a rotor disposed in the motor compartment, wherein a first fluid path from a submerged oil environment of the housing into the motor compartment is provided, in order to enable oil to flow from the submerged oil environment into the motor compartment.

EP 1 302 704 A2 discloses an electric fluid pump for a transmission, transfer case or an oil reservoir. The pump is contained within the transmission, transfer case or engine oil reservoir and has an open housing that allows fluid into the motor for cooling and lubrication.

US 7 556 479 discloses a power steering pump having a housing with a longitudinal bore communicating with a fluid outlet. A fluid discharge port communicates with the bore and a fluid bypass port also communicates with the bore. A flow control member is situated in the bore and forms an outlet passage communicating with the fluid outlet. A flow control valve is slidably received in the bore. The flow control valve operates to open and allow communication between the fluid discharge port and the outlet passage in the flow control member. When the fluid flow from the fluid discharge port reaches a suitable pressure, the valve opens further to allow fluid flow from the fluid discharge port to the bypass port. A fluid pressure passage communicates pressure from the fluid outlet to a pressure sensing chamber forming part of the flow control valve assembly. A filter located downstream from the flow control member operates to filter fluid passing through the fluid pressure passage.

WO 2013/125339 A1 discloses an electric pump configured so that the heat of the pump unit or of the coil which drives the pump unit is not transmitted to a control unit. The electric pump is provided with: a housing which has a housing space for both the pump unit and the control unit; an outer rotor and an inner rotor, which are provided to the pump unit, suck fluid, and rotate to discharge the fluid; a circuit board which is provided to the control unit and which controls the rotation of both the outer rotor and the inner rotor; a coil which is disposed between the pump unit and the control unit and to which electricity is supplied from the circuit board; a motor rotor which is rotated by the supply of electricity to the coil; a shaft which rotates the inner rotor by the rotation of the motor rotor; and a heat insulation member which is provided between the pump unit and the control unit.

### SUMMARY OF THE INVENTION

According to the present invention, a submersible pumping apparatus for displacing transmission fluid includes a pump operably coupled with a motor. A filter housing is attached to the pump and has a cavity with an inlet aperture extending to an exhaust port of the pump. A fluid filter is engaged with the cavity and has a filter cover with a relief valve disposed within an outlet aperture that extends from the cavity to an exit port on the filter cover. A rotor cover is attached to the motor and has a circuit board for operating the motor. The rotor cover is configured to prevent the circuit board from being exposed to liquid.

According to the present invention, a pumping apparatus for displacing fluid includes a pump adapted to operably couple with a motor. A filter housing is coupled with the pump and has a cavity with an inlet aperture extending to an exhaust port of the pump. A fluid filter is engaged with the cavity and has a filter cover sealed around a periphery of the cavity. A relief valve is disposed in the filter cover between the cavity and an exit port, such that the relief valve is configured to open when a fluid pressure from the exit port reaches a threshold and close when the fluid pressure is below the threshold.

According to another aspect of the present invention, a filter module for a pump within a fluid reservoir of a vehicle includes a filter housing that is adapted to couple with the pump and has a filter cavity with an inlet aperture for extending to the pump. A filter cover is sealably coupled with a periphery of the filter cavity. A filter element for filtering fluid displaced by the pump is coupled with an inside surface of the filter cover. A relief valve is disposed in the filter cover between the filter element and an exit port on the filter cover. The relief valve is configured to open when a fluid pressure from the exit port reaches a threshold and close when the fluid pressure is below the threshold.

According to yet another aspect of the present invention, a submersible pumping apparatus for displacing fluid includes a motor housing having a drive coil. A rotor shaft is rotatably engaged within the motor housing and configured to operably couple with a positive displacement pump. A rotor cover is attached to the motor and includes a bearing integrally coupled with an interior side of the rotor cover and rotatably coupled with an end of the rotor shaft. The rotor cover also includes a circuit board for operating the drive coil to control rotation of the rotor shaft, wherein the rotor cover is configured to prevent the circuit board from being exposed to liquid.

These and other aspects, objects, and features of the present invention will be understood and appreciated by those skilled in the art upon studying the following specification, claims, and appended drawings.

### BRIEF DESCRIPTION OF THE DRAWINGS

In the drawings:
FIG. 1 is top perspective view of a pumping apparatus mounted within a fluid compartment of a vehicle transmission, according to one aspect of the present innovation;
FIG. 2 is a top plan view of the pumping apparatus and the fluid compartment shown in FIG. 1;
FIG. 3 is a cross-sectional top plan view of the pumping apparatus, schematically showing fluid circulation within the pumping apparatus;
FIG. 3A is a cross-sectional top plan view of the pumping apparatus as shown in FIG. 3, schematically showing fluid circulation with a relief valve open;
FIG. 4 is a top perspective view of the pumping apparatus shown in FIG. 1, taken from an end having a rotor cover attached to a motor of the pumping apparatus;
FIG. 5 is a top perspective view of the pumping apparatus shown in FIG. 1, taken from an end having a filter module attached to a pump of the pumping apparatus;
FIG. 6 is a top perspective view of the pumping apparatus as shown in FIG. 5, having portions shown in phantom lines to expose a filter element and a release valve of the filter module, fasteners extending between the filter module and the rotor cover, and other components of the pump and the motor;
FIG. 7 is an exploded top perspective view of the pumping apparatus as shown in FIG. 4, taken from the end having the rotor cover attached to the motor;
FIG. 8 is an exploded top perspective view of the pumping apparatus shown in FIG. 5, taken from the end having the filter module attached to the pump;
FIG. 9 is an exploded top perspective view of the filter module of the pumping apparatus;
FIG. 10 is an exploded top perspective view of a filter element of the filter module;
FIG. 11 is an exploded top perspective view of a cover and the filter element of the filter module;
FIG. 12 is an end elevation view of the pumping apparatus shown in FIG. 5, showing the filter module;
FIG. 13 is a cross-sectional view of the filter module, taken at line XIII-XIII of FIG. 12;
FIG. 13A is a cross-sectional view of the filter module as shown in FIG. 13 with the relief value in an open position;
FIG. 14 is a side elevation view of the pumping apparatus shown in FIG. 5;
FIG. 15 is a cross-sectional view of the release valve of the filter module, taken at line XV-XV of FIG. 14;
FIG. 16 is a top perspective view of the cross section the release valve of the filter module shown in FIG. 15;
FIG. 17 is an exploded top perspective view of the pump and the motor of the pumping apparatus shown in FIG. 5;
FIG. 18 is an exploded top perspective view of components the motor shown in FIG. 17;
FIG. 19 is a top perspective view of the end of the pumping apparatus having the motor, which is shown without the rotor cover;
FIG. 20 is a top perspective view of the end of the pumping apparatus shown in FIG. 19, illustrating a portion of the rotor cover;
FIG. 21 is a top perspective view of the end of the pumping apparatus shown in FIG. 19, illustrating a circuit board attached to a portion of the rotor cover;
FIG. 22 is a top perspective view of the end of the pumping apparatus shown in FIG. 19, illustrating a protective cover concealing the circuit board;
FIG. 23 is a top perspective view of the rotor cover, taken from an end having a bearing integrally coupled with the rotor cover;
FIG. 24 is an exploded top perspective view of the rotor cover, taken from an end having the bearing integrally coupled with the rotor cover;
FIG. 25 is an exploded top perspective view of the rotor cover, taken from an end having the protective cover;
FIG. 26 is a cross-sectional view of the motor and the rotor cover, taken at line XXVI-XXVI of FIG. 22; and
FIG. 27 is a cross-sectional view of the motor and the rotor cover, taken at line XXVII-XXVII of FIG. 22.

### DETAILED DESCRIPTION OF PREFERRED EMBODIMENTS

For purposes of description herein, it is to be understood that the disclosed invention may assume various alternative embodiments and orientations, except where expressly specified to the contrary. It is also to be understood that the specific devices and processes illustrated in the attached drawings, and described in the following specification are simply exemplary embodiments of the inventive concepts defined in the appended claims. While various aspects of the disclosed invention and the related methods are described with reference to a particular illustrative embodiment, the disclosed invention is not limited to such embodiments, and additional modifications, applications, and embodiments may be implemented within the scope of the appended claims. Hence, specific dimensions and other physical characteristics relating to the embodiments disclosed herein are not to be considered as limiting, unless the claims expressly state otherwise.

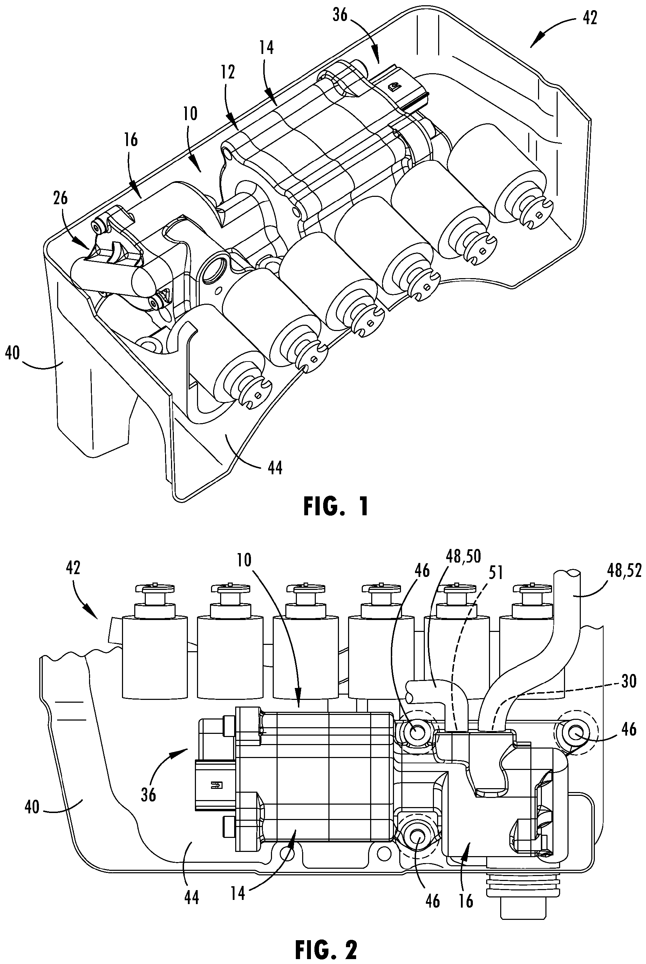

Referring to FIGS. 1-27, reference numeral 10 generally designates a submersible pumping apparatus for displacing fluid, such as transmission fluid, coolant, or other conscionable liquids, that may be circulated to associated components of a vehicle. The pumping apparatus 10 includes a pump 12 operably coupled with a motor 14. In one embodiment, the pumping apparatus 10 also includes a filter housing 16 attached to the pump 12. The filter housing 16 has a cavity 18 with an inlet aperture 20 that extends to an exhaust port 22 of the pump 12. A fluid filter 24 engages the cavity and has a filter cover 26 with a relief valve 28 that is disposed within an outlet aperture 30, which extends from the cavity 18 to an exit port 32 on the filter cover 26. The fluid filter 24 may include a filter element 34 between the inlet aperture 20 on the filter housing 16 and the outlet aperture 30 for filtering the displaced fluid to prevent particles within the fluid from deteriorating or otherwise damaging associated vehicle components. Also, an embodiment of the pumping apparatus 10 includes a rotor cover 36 that is attached to the motor 14 and that has a circuit board 38 for operating the motor 14. The rotor cover 36 is configured to prevent the circuit board 38 from being exposed to liquid. Accordingly, it is contemplated that the pumping apparatus 10, to efficiently pump transmission fluid and to optimize the use of space within an engine compartment, may be mounted within a lower cavity of a transmission, such that the pumping apparatus 10 may be partially, and at times, completely submerged within transmission fluid.

Referring now to FIG. 1, one embodiment of the submersible pumping apparatus 10 is shown positioned in a lower portion 40 of a vehicle transmission 42. The pumping apparatus 10 of the illustrated embodiment is mounted slightly above a pan that defines a lower surface 44 of an interior volume of the transmission 42. The interior volume of the lower portion 40 of the vehicle transmission 42 is configured to contain transmission fluid for cooling and lubricating the vehicle transmission, along with other associated vehicle components. Accordingly, the pumping apparatus 10, when mounted in such a position as illustrated, is adapted to operate when partially and completely submerged within the transmission fluid. In one embodiment, the motor 14 of the pumping apparatus 10 may be configured to allow the surrounding fluid, such as the transmission fluid, to enter the motor housing and utilize the lubrication and cooling attributes of the fluid. It is contemplated that the pumping apparatus 10, in additional embodiments, may be positioned at alternative locations within the vehicle transmission 42, transmission fluid compartments, and other locations within the vehicle. Further, it is conceivable that an additional embodiment of the pumping apparatus 10 may be configured to displace other liquids, and accordingly may be located within an associated liquid compartment.

As shown in FIG. 2, the illustrated embodiment of the pumping apparatus 10 includes three mounting apertures 46 for securing the pumping apparatus 10 to the lower portion 40 of the vehicle transmission 42. The mounting apertures 46 in the illustrated embodiment are formed through the filter housing 16, such that the filter housing 16 is directly attached to the lower surface 44 of the transmission 42 with fasteners, such as bolts. As illustrated, the filter housing 16 is also attached with fluid conduits 48, namely flexible hoses, which carry the circulating transmission fluid to the various vehicle components. More specifically, the filter housing 16 has a first hose 50 that attaches to an intake aperture 51 on the filter housing 16 and a second hose 52 that attaches to the outlet aperture 30. It is contemplated that the fluid conduits 48, in additional embodiments, may include rigid pipes or other means as generally understood by one of ordinary skill in the art to carry the circulating fluid.

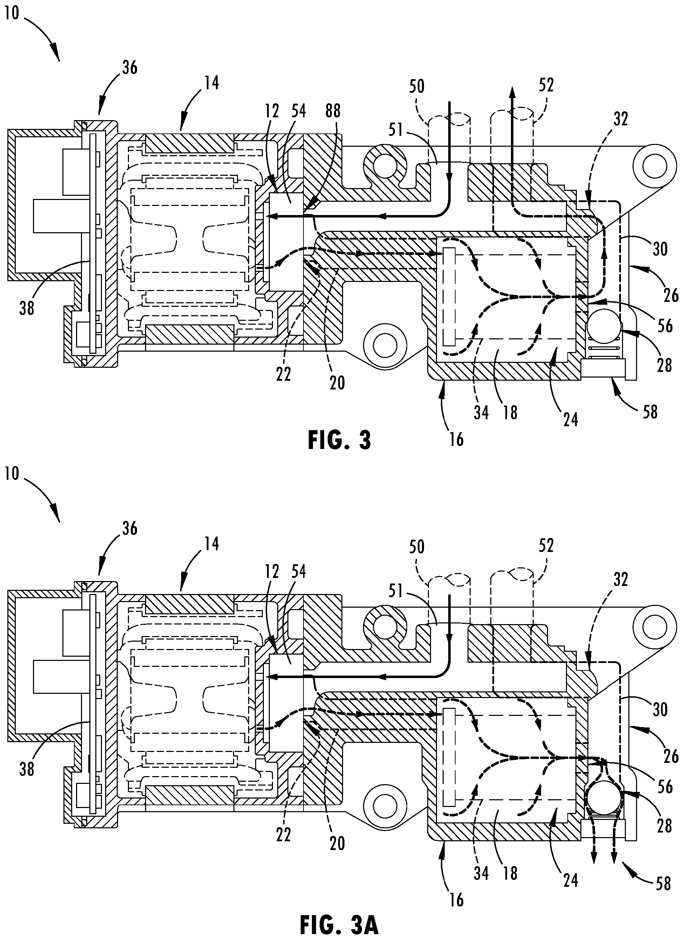

With reference to FIG. 3, the transmission fluid that is circulated through one embodiment of the pumping apparatus 10 is illustrated with arrows entering the intake aperture 51 and exiting the outlet aperture 30. During operation of the pumping apparatus 10, the motor 14 rotates a geroter unit 54 of the pump 12 to displace the fluid from the intake aperture 51 of the filter housing 16, displace the fluid through the pump 12 and the filter element 34 of the fluid filter 24, and displace the fluid out the outlet aperture 30. In the illustrated embodiment, the outlet aperture 30 extends from an intake port 56 on the filter cover 26, through the filter cover 26, to the exit port 32 on the filter cover 26 and into the filter housing 16 proximate the connection with the second hose 52. In one embodiment, the outlet aperture 30 also extends in an opposing direction within the filter cover 26 to a relief port 58, as described in more detail below. It is contemplated that the outlet aperture 30 may terminate at the exit port 32 and exit though the filter cover 26, whereby the second hose 52 may alternatively attach to the filter cover 26 in an additional embodiment of the pumping apparatus 10. Also, the pump 12 in the illustrated embodiment comprises a positive displacement pump, namely the geroter unit 54, however, in additional embodiments, the pump 12 may be a screw pump, a rotary vain pump, a piston pump, or other conceivable types of positive displacement pumps or other varieties of fluid pumps.

As further illustrated in FIGS. 3 and 3A, the circulation of transmission fluid may be altered by the relief valve 28 disposed within the filter cover 26. More specifically, in one embodiment, the exit port 32 may be referred to as a hydraulic fluid flow port, whereby fluid pressure proximate the exit port 32 from the second hose 52 is indicative of whether an associated vehicle engine is running. As such, the relief valve 28 is configured to open when a fluid pressure from the exit port 32 reaches a threshold and closes when the fluid pressure from the exit port 32 is below the threshold. As shown in FIG. 3, the relief valve 28 is closed and transmission fluid is circulating from the intake port 56 on the filter cover 26, through the outlet aperture 30, the exit port 32, and to the second hose 52. As shown in FIG. 3A, the relief valve 28 is open due to increased fluid pressure proximate the exit port 32, such that transmission fluid is displaced, at least in part, from the intake port 56 on the filter cover 26 to the relief port 58 beyond the relief valve 28. In one embodiment, the relief port 58 dispenses to a sump basin of the transmission 42 for further circulation. It is understood that the relief valve 28 may open to effectively prevent the motor from overheating, which may be caused when fluid is expelled to the exit port 32 that dead heads against a higher pressure fluid. It is also contemplated that the flow of transmission fluid may be reversed through the illustrated embodiment, while still achieving advantages of the present invention.

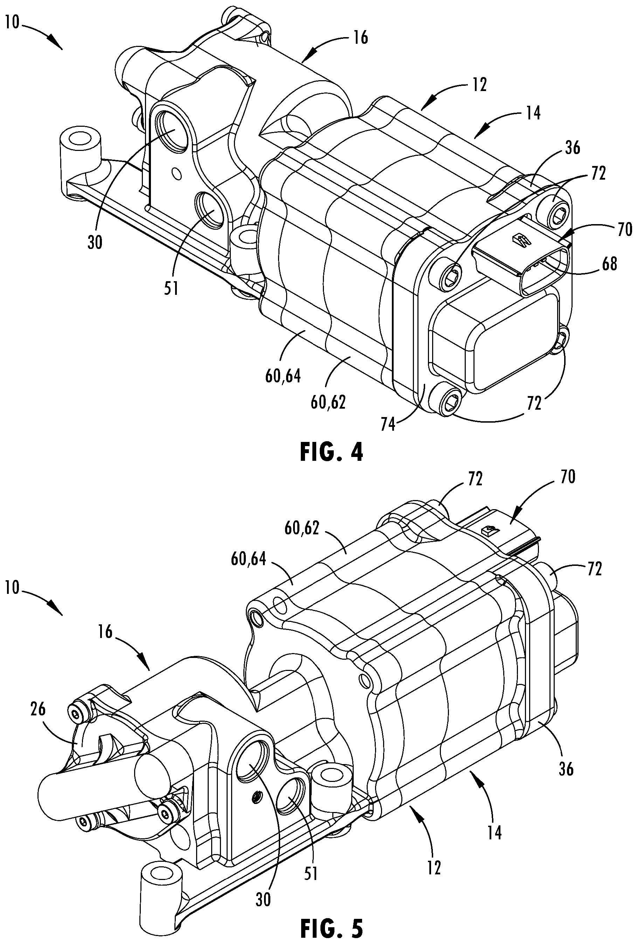

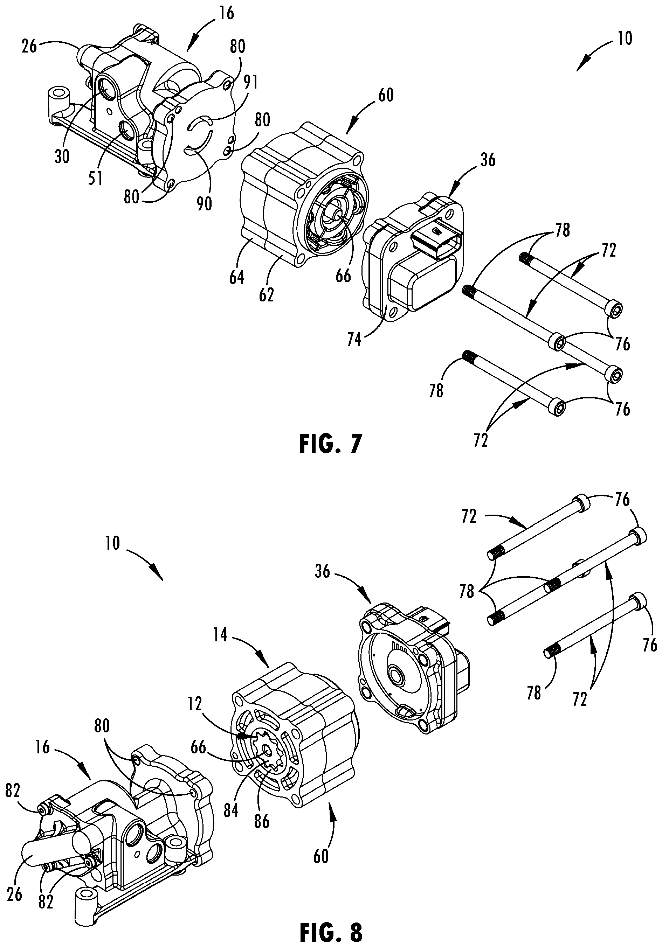

Referring now to FIGS. 4 and 5, one embodiment of the pumping apparatus 10 is illustrated removed from a mounting location, such as the vehicle transmission 42 shown in FIGS. 1 and 2. The motor 14, as illustrated, is encased with a motor housing 60 that is separated into two sections, a first section 62 and a second sections 64, that each surrounds a rotational axis of a rotor shaft 66 (FIG. 7) of the motor 14. The first section 62 of the motor housing 60 is directly attached to the rotor cover 36. The rotor cover 36 includes a terminal element 68 within an electrical receptacle 70 that is configured to electrically connect the circuit board 38 (FIG. 3) contained therein with an electric connection that transmits power and carries communication signals for operating the motor 14 and the pump 12. To secure the rotor cover 36, four elongated fasteners 72 extend through the rotor cover 36 at corner locations on an end surface 74 of the rotor cover 36, which has a generally rectangular shape, although various shapes and attachment locations are contemplated. The elongated fasteners 72 also extend through the first and second sections 62, 64 of the motor housing 60 and engage the filter housing 16 to attach the rotor cover 36 to the motor housing 60 and compressively retain the first and second sections 62, 64 of the motor housing 60 together with outer surfaces thereof in alignment. It is contemplated that more or fewer elongated fasteners 72 may be used to provide such a compressive connection. Also, it is generally understood that the motor housing 60 may include more or fewer sections divided along the rotational axis of the rotor shaft 66.

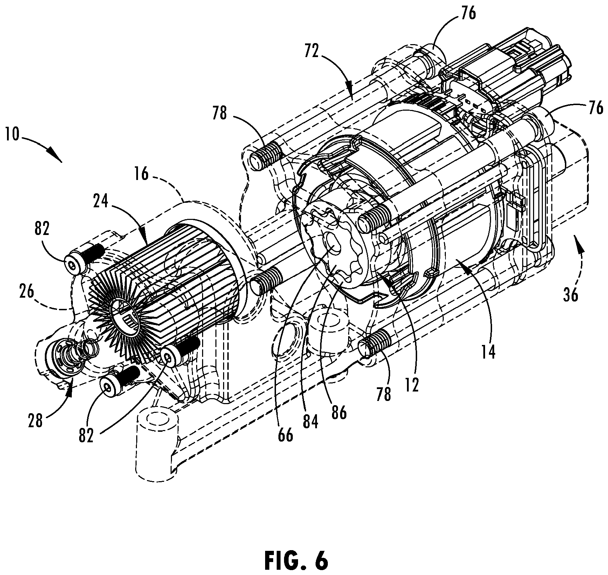

As shown in FIGS. 6-8, the elongated fasteners 72 include a head portion 76 that abuts the end surface 74 of the rotor cover 36 and a threaded portion 78 that threadably engages with fastener apertures 80 on the filter housing 16. As also shown, the filter cover 26 is mounted to an end of the filter housing 16 opposite the connection between the filter housing 16 and the motor housing 60. The filter cover 26 is attached to the filter housing 16 with threaded fasteners 82 to similarly provide a compressive connection between the filter cover 26 and the filter housing 16. As such, it is also contemplated that more or fewer fasteners or an alternative type of fastener may be used to attach the filter cover 26 to the filer housing 16.

With further reference to FIGS. 6-8, the pump 12 is substantially contained within the second section 64 of the motor housing 60 and is thereby operably coupled with the motor 14 and directly engaged with the filer housing 16. More specifically, an internal component 84 of the gerotor unit 54 is rigidly coupled with the rotor shaft 66 of the motor 14 and an external component 86 of the gerotor unit 54 is rotatable coupled with the second section 64 of the motor housing 60. As generally understood, the interface between the internal and external components 84, 86 of the gerotor unit 54 defines an intake port 88 and an exhaust port 22 of the pump 12 (FIG. 3). As such, the filter housing 16, as shown in FIG. 7, is provided with an intake opening 90 having an arcuate shape that conforms to the intake port 88 of the gerotor unit 54. Likewise, the filter housing 16 includes an outlet opening 91 that similarly has an arcuate cross sectional shape proximate the interface between the pump 12 and the second section 64 of the motor housing 60 to conform to the exhaust port 22 of the gerotor unit 54. For the pump 12 to efficiently circulate the transmission fluid through the filter housing 16, a fluid seal is provided between the filter housing 16 and the second section 64 of the motor housing 60, surrounding the gerotor unit 54. However, it is understood that the second section 64 of the motor housing 60 may also be integrally formed with the filter housing 16 in additional embodiments of the pumping apparatus 10.

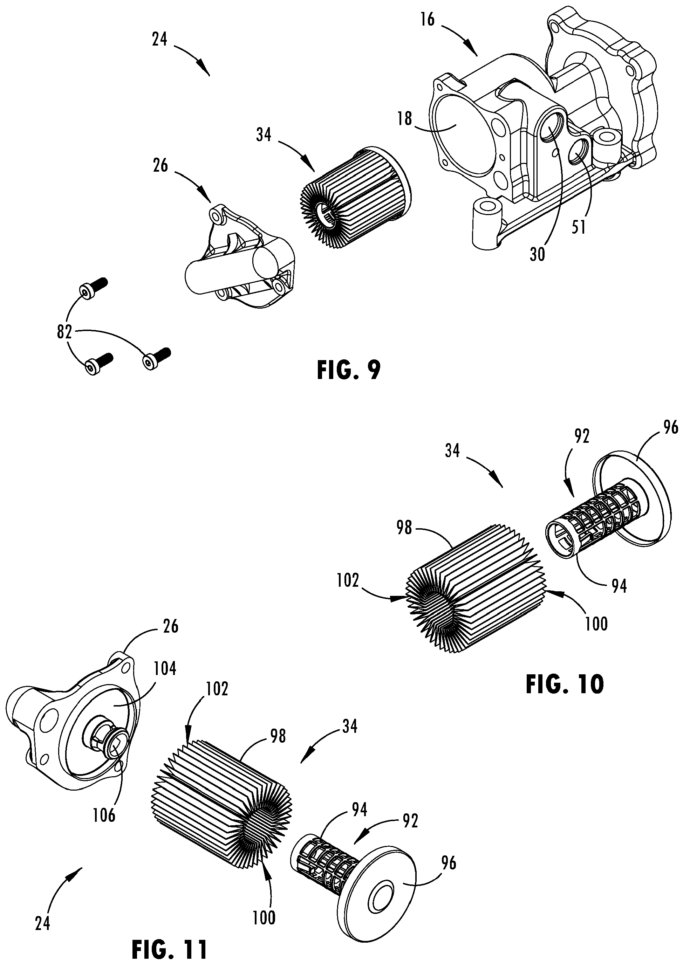

As illustrated in FIG. 9, the fluid filter 24 is disengaged and exploded away from the filter housing 16, exposing the cavity 18 for receiving the filter element 34. The cavity 18 has a cylindrical shape sized to receive the filter element 34, although other shapes and sizes are conceivable to alternatively house the filter element 34. As such, a diameter of the illustrated cylindrical cavity 18 is slightly greater than a diameter of the filter element 34 to allow fluid to circulate around the circumference of the filter element 34 within the cavity 18, and thereby pass through a side wall of the filter element 34 before exiting to the filter cover 26.

With further reference to the fluid filter, as shown in FIGS. 10 and 11, the filter element 34 has a structural component 92 with a tubular portion 94 that has apertures disposed about the circumference and a flange portion 96 protruding radially from an end of the tubular portion 94 with a substantially impermeable construction that covers the end of the tubular portion 94, thereby concealing one end of the interior volume of the tubular portion 94. The flange portion 96 may be integrally formed with the tubular portion 94 in one embodiment or separately attached thereto in another embodiment, and further the flange portion 96 may also be referred to as a filter cap. The filter element 34 also includes a filter substrate 98 disposed around the tubular portion 94 for filtering fluids displaced through the cavity 18. In the illustrated embodiment, the filter substrate 98 is arranged around the tubular portion 94 of the structural component 92 in a manner that provides folds having longitudinal creases to define a sidewall of the filter element 34. A first end 100 of the filter substrate 98 is adhered to the flange portion 96 of the structural component 92 to prevent fluid from bypassing the filter substrate 98 when flowing from the cavity 18 into the interior volume of the tubular portion 94 of the structural component 92 and thereby through the filter element 34. The second end 102 of the filter substrate 98 is similarly adhered to an inside surface 104 of the filter cover 26. It is contemplated that the filter substrate 98 may include various filtering materials, although in the illustrated embodiment the material is configured specifically for filtering transmission fluid.

As also shown in FIG. 11, the inside surface 104 of the filter cover 26 has a connection feature 106 protruding into the cavity 18 to engage a central volume of the filter element 34, defined in the illustrated embodiment by an interior volume of the tubular portion 94 of the structural component 92. Accordingly, the central volume of the filter element 34 transmits filtered transmission fluid to the outlet aperture 30 extending within the filter cover 26. It is contemplated that the filter element 34 may be alternatively arranged on the filter cover 26 to be similarly suspended within the cavity 18 of the filter housing 16, such as having a conical shape and/or molding the filter substrate 98 with the filter cover 26 and/or the structural component 92, among other conceivable configurations.

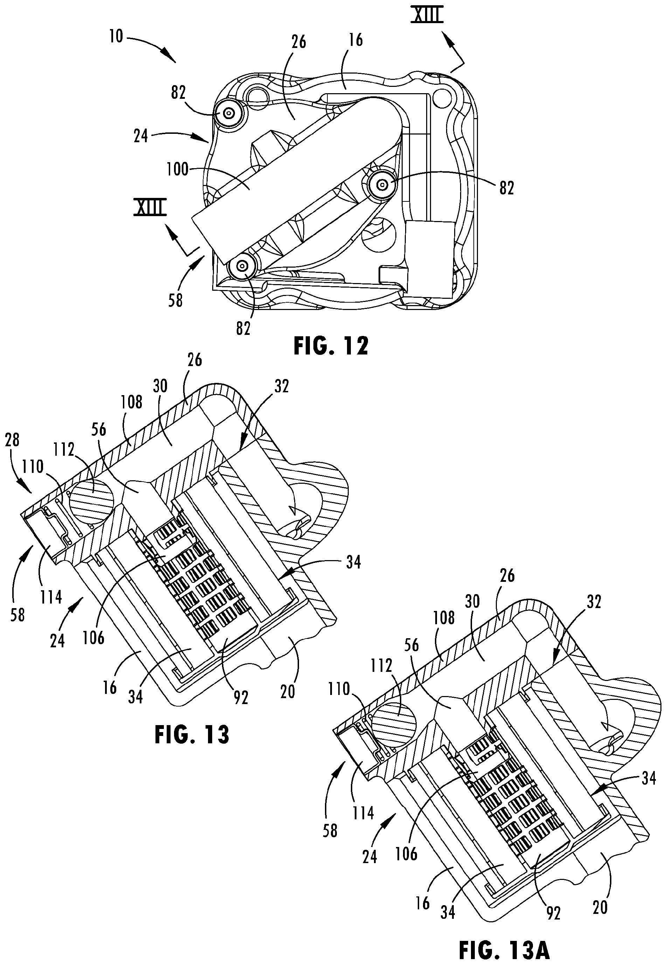

As shown in FIGS. 12 and 13, the filter cover 26 is further illustrated to show the relief valve 28 disposed within and integrated with the outlet aperture 30 that extends through the filter cover26. The filter cover 26 has a cylindrical protrusion 108 with an axis oriented orthogonal with respect to the central access of the filter element 34 to define an outside surface of the filter cover 26. With this configuration, the intake port 56 on the filter cover 26 is coaxial with the filter element 34 and forms a T-shape with the section of the outlet aperture 30 that extends within the cylindrical protrusion 108 of the filter cover 26. It is contemplated that the intersection between the intake port 56 and the outlet aperture 30 may have alternatively shaped configurations to similarly provide a passageway for the transmission fluid to be displaced from the fluid filter 24 to the exit port 32 that leads to the associated vehicle components and a passageway that leads to the relief port 58 that transmits transmission fluid from the relief valve 28 to the sump basin. The relief valve 28 in the illustrated embodiment includes a spring 110 coupled between an impermeable sphere 112 and a porous plug 114, thereby defining a spring loaded ball valve. The relief valve 28 in the illustrated embodiment is configured with the spring 110 biasing the sphere 112, which is also referred to as a blocking member, against a narrowed portion of the outlet aperture 30 in the closed position, as shown in FIG. 13. In an open position, shown in FIG. 13A, the fluid pressure from the exit port 32 displaces the sphere 112 away from the narrowed portion of the outlet aperture 30 against the spring's biasing force and creates an opening 116 between the sphere 112 and the narrowed portion of the outlet aperture 30 to allow fluid to flow beyond the sphere 112, through the porous plug 114, and out the relief port 58. It is contemplated that the relief valve 28 may include an alternatively shaped blocking member that is otherwise biased in a closed position that is adapted to be overcome to open such a relief valve 28.

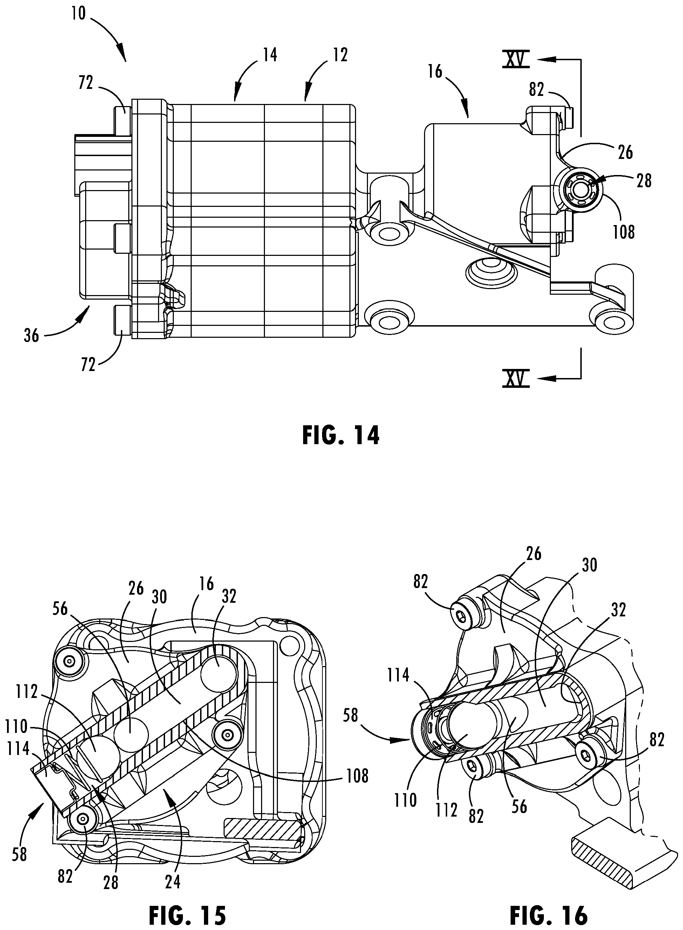

Further, as illustrated in FIGS. 14-16, the section of the outlet aperture 30 that extends through the filter cover 26 has the exit port 32 formed at an end of the cylindrical protrusion 108 opposite the end containing the relief valve 28. The exit port 32, which may also be referred to as a section of the outlet aperture 30, extends through a cylindrical channel with a diameter substantially equal to the diameter to the section of the outlet aperture 30 contained in the cylindrical protrusion 108 on the filter cover 26. Further, the exit port 32 extends back to the filter housing 16, whereby the exit port 32 may connect with the second hose 52 (FIG. 3). It is generally understood that the apertures, ports, and channels that extend through the filter housing 16 and the filter cover 26 may be alternatively shaped from the illustrated embodiment to direct the flow of transmission fluid.

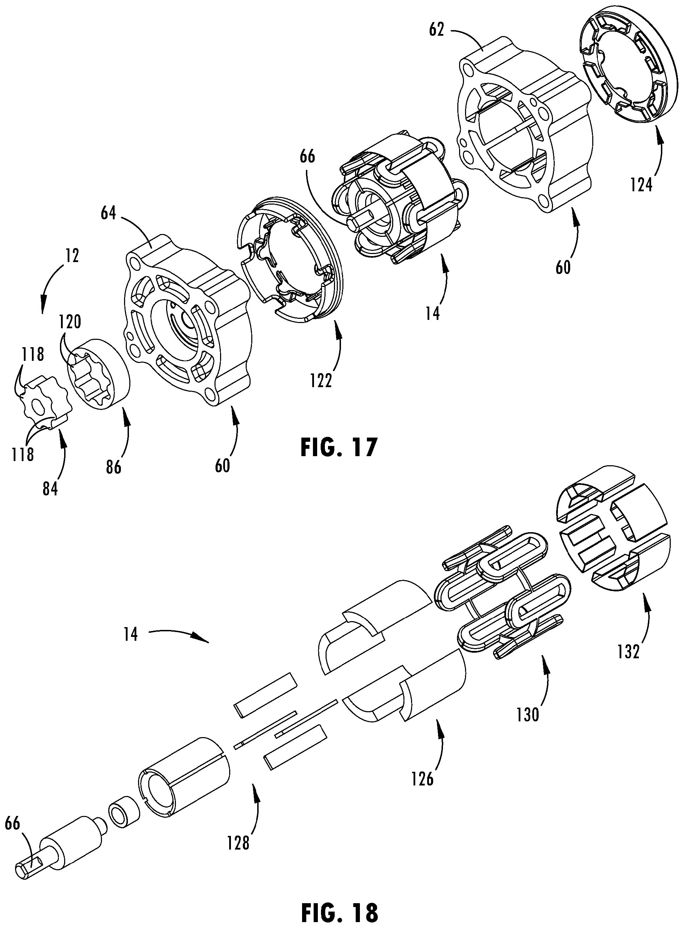

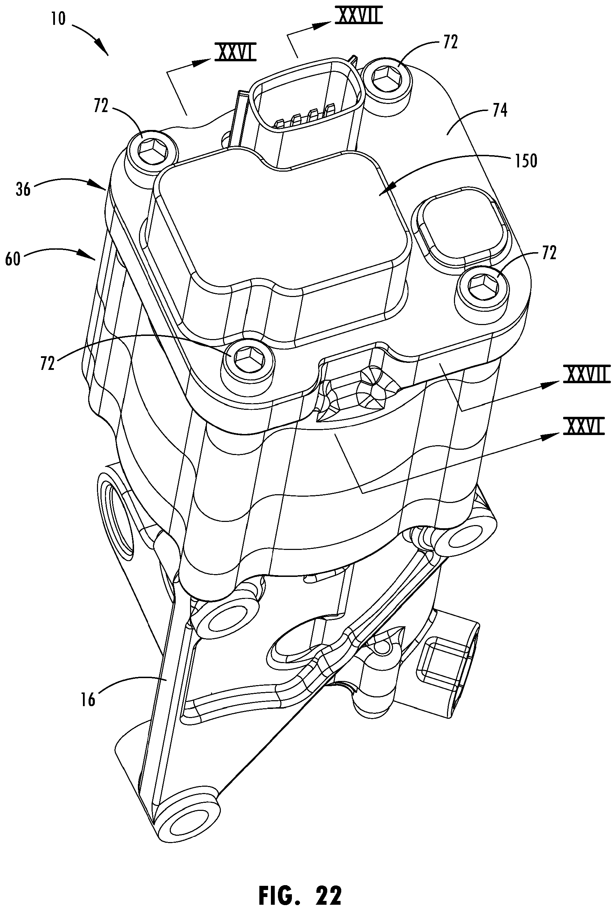

Referring now to FIGS. 17 and 18, various components of one embodiment of the pump 12 and one embodiment of the motor 14 are exploded to illustrate additional details. As previously mentioned, the internal component 84 of the gerotor unit 54 is configured with the external component 86 of the gerotor unit 54 to provide intake and exhaust ports 88, 22 of the pump 12,a s shown in FIG. 3. The internal component 84, more specifically, has radially extending protrusions 118 that interface with depressions 120 formed about an interior circumference of the external component 86. An exterior circumference of the external component 86 has a generally smooth surface for slidably and rotatably engaging with an opening disposed in the second section 64 of the motor housing 60 at a location offset from the rotational axis of the rotor shaft 66 to provide the pumping function of the gerotor unit. A second seal 122 engages around the opening in the second section 64 of the motor housing 60 to provide a fluid seal between the first and second sections in 62, 64 the motor housing 60. The first section 62 of the motor housing similarly includes a first seal 124 that is positioned to engage the rotor cover 36 (FIG. 22) on a side of the first section 62 opposite the second section 64 of the motor housing 60.

As also shown in FIG. 18, the motor 14 includes a rotor shaft 66 that has a number of conductive elements 126 fixed to a carrier 128 that attaches about the circumference of the rotor shaft 66. The conductive elements 126 are configured to interface with a magnetic field generated the stator, which in the illustrated embodiment is done by currents transmitted through wire coils 130 arranged circumferentially around the rotor shaft 66 and around the conductive elements 126 fixed thereto. In the illustrated embodiment, the conductive elements 126 are also positioned at a spaced distance from the wire coils 130, which are wound around fixed winding brackets 132. It is contemplated that the motor may be differently configured in alternative embodiments, such as alternative arrangements of the stator and/or rotor shaft 66.

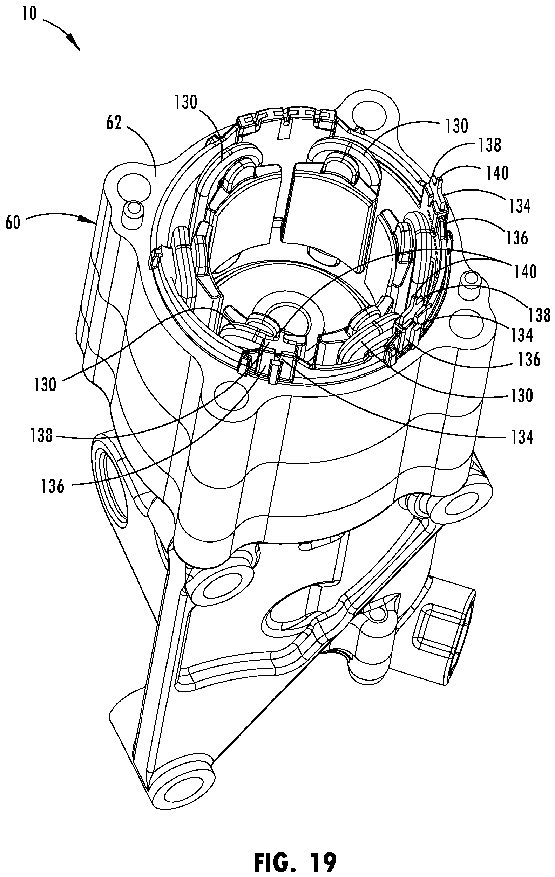

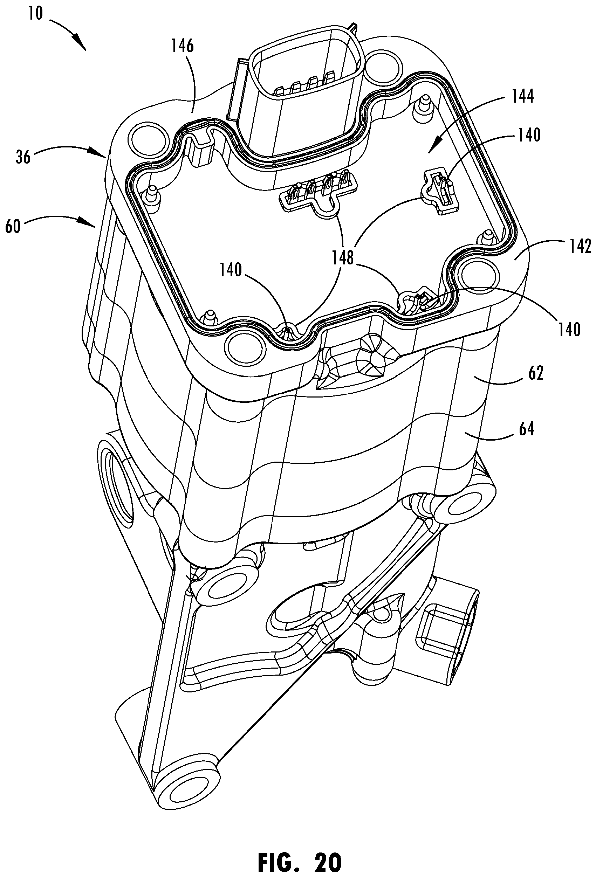

Referring now to FIGS. 19-22, sequential assembly steps are illustrated to show the motor 14 being operably coupled with rotor cover 36, and partial assembly thereof. As shown in FIG. 19, the fixed winding brackets 132 are secured to the first section 62 of the motor housing 60. Upon completion of winding the wire coils 130 around the winding brackets 132, an end wire 134 is laid across a slot formed in a connection socket 136. The connection socket 136 receives a metal plate 138 that has a post 140 protruding away from the connection socket 136 in parallel alignment with the rotational axis of the rotor shaft 66 (FIG. 17). The metal plate 138 may also be referred to as a coil element for making an electrical connection between the wire coils 130 and the circuit board 38. As illustrated in FIG. 20, upon attachment of a body portion 142 of the rotor cover 36 to the first section 62 of the motor housing 60, the posts 140 extends into a circuitry cavity 144 formed in an outer surface 146 of the body portion 142 of the rotor cover 36. The posts 140 are also surrounded with well features 148 that are configured to receive and contain a liquid sealing agent, such as silicone, that is adhered in the well features 148. The posts 140 and well features 148, together with the sealing agent, are adapted to prevent transmission fluid that may be present within the motor 14 from entering the circuitry cavity 144 through the body portion 142 of the rotor cover 36.

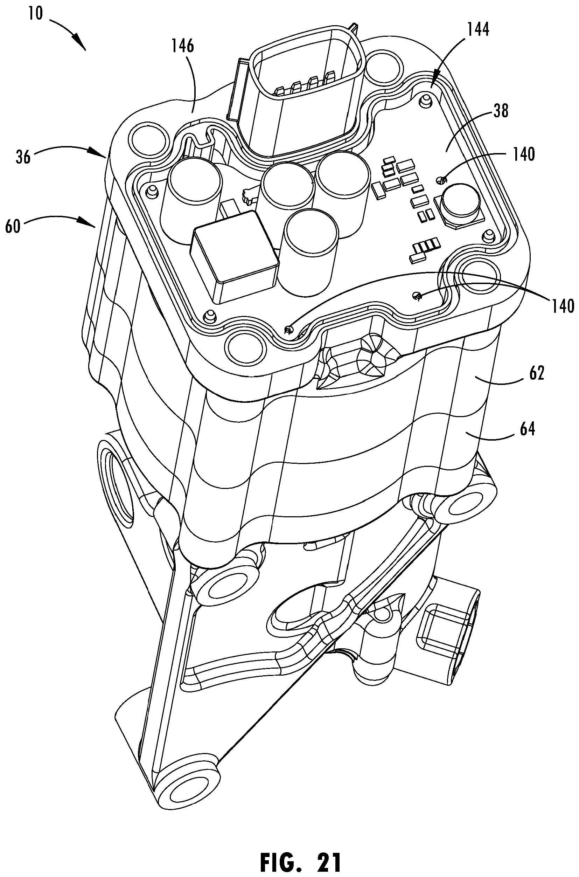

As illustrated in FIG. 21, the circuit board 38 is placed into the circuitry cavity 144 and engages at least one of the posts 140 to form an electrical connection with the stator of the motor 14. More specifically, the circuit board 38 electrically connects with the wire coils 130 of the motor 14 via the fluidly sealed posts 140. The circuit board 38 includes a controller for operating the electric motor 14, specifically operating the wire coils 130 to control the magnetic field generated, thereby controlling rotation of the rotor shaft 66. The circuit board 38 includes addition circuitry components, including resisters, transducers, and capacitors to effectuate accurate control of the electric motor 14.

A protective cover 150, as shown in FIG. 22, is sealably attached to a periphery of the circuitry cavity 144 formed in the outer surface 146 of the body portion 142 of the rotor cover 36. The protective cover 150 conceals and protects the circuit board 38 from being exposed to transmission fluid or other fluid circulating within the pump 12, motor 14, and/or other fluid in which the pumping apparatus 10 may be submerged. The fluid seal between the protective cover 150 and the body portion 142 may be a formed in place gasket or other seal, such as a silicone seal, that is applied between the body portion 142 and the protective cover 150 to provide a liquid tight seal. This seal may be compressed with the elongated fasteners 72 that extend through the protective cover 150 and the body portion 142 of the rotor cover 36 to attach with the motor housing 60 and the filter housing 16. In one embodiment, a portion or the entire the rotor cover 36 and a portion or the entire circuit board 38 may be constructed of PPA or PBT material to withstand high temperatures generated proximate rotor shaft 66 of the motor 14. Additional components of the pump 12 and the motor 14 may also be constructed and configured to withstand these high temperatures, which can range between 80° and 100° Celsius.

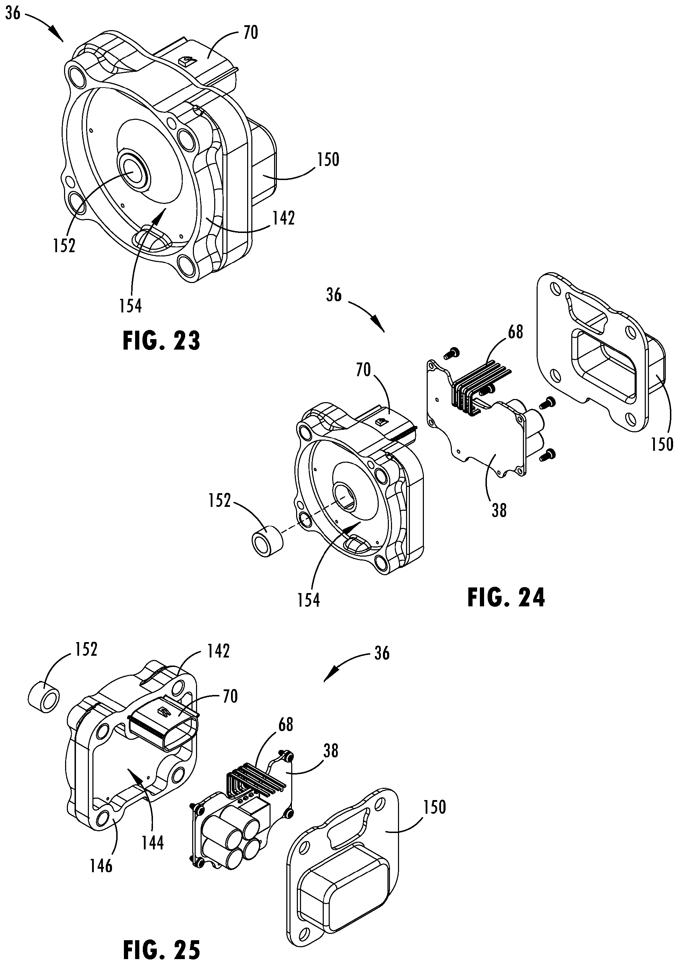

As shown in the embodiment of the rotor cover 36 illustrated in FIG. 23, a bearing 152 is integrally coupled with an inner surface 154 of the body portion 142 of the rotor cover 36 for rotatably engaging an end of the rotor shaft 66 (FIGS. 7 and 8) of the motor 14. The bearing 152, as shown, is centrally located on the inner surface 154 and protrudes axially therefrom, such that the rotor shaft 66 and heat generated therefrom does not impede on the circuitry cavity 144 (FIG. 20) on the opposing side of the body portion 142. Also, the bearing 152 protrudes axially away from the body portion 142 to provide a depressed area around the rotor shaft 66 proximate the body portion 142 for the wire coils 130 of the stator (FIG. 7).

As also illustrated in FIGS. 24-25, the rotor cover includes the terminal element 68 that extends integrally within the body portion 142 of the rotor cover 36 to connect between the electrical receptacle 70 protruding from the outer surface 146 of the rotor cover 36 and the circuit board 38 contained within the circuitry cavity 144 enclosed by the protective cover 150. The terminal element 68 includes four rigid metal filaments that have a U-shape with the curved portion molded into the body portion 142 of the rotor cover 36. It is contemplated that the terminal element 68 may have more or few metal filaments in additional embodiments, and further that the terminal element 68 may have other shapes to extend between the circuit board 38 and the electrical receptacle 70.

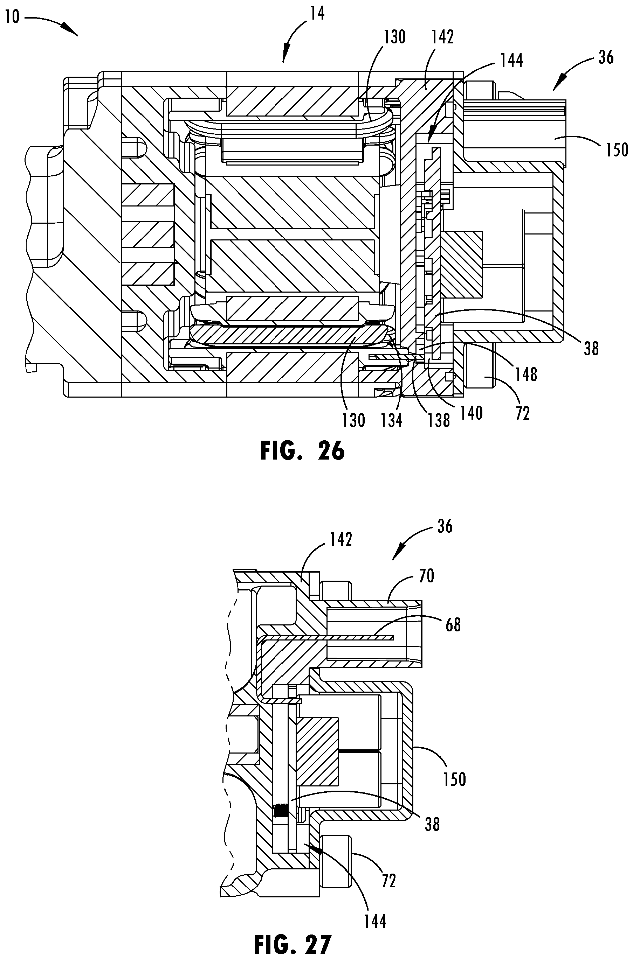

The fluid sealing of the circuit board 38 within the rotor cover 36 is further illustrated in FIGS. 26 and 27, which shows the metal plates 138 that directly contact the end wires 134 of the wire coils 130 of the stator extending into the circuitry cavity 144 to electrically connect with the circuit board 38. Also shown in the illustrated embodiment, the metal plates 138 have a sealing agent applied around the posts 140 within the well features 148 of the circuitry cavity 144 to prevent transmission fluid from entering the circuitry cavity 144 from the motor 14. Also, the terminal element 68, as shown in FIG. 27, is molded into the body portion 142 of the rotor cover 36 and fluidly sealed with a well feature 148 surrounding an end of the terminal element 68 that protrudes into the circuitry cavity 144, as shown in FIG. 20. It is contemplated that additional electrical components may be fluidly sealed to provide the circuitry cavity 144 with a dry environment for operating the circuit board 38 that controls the motor 14 of the pumping apparatus 10.

According to another aspect of the present invention, a method of making a pumping apparatus 10 for circulating transmission fluid includes providing an electrical motor 14 and operably attaching a pump 12 with the electrical motor 14. A filter housing 16 is attached to the pump 12, such that a cylindrical cavity 18 of the filter housing 16 has an inlet aperture 20 extending to the pump 12. A filter module 24 is attached to the filter housing 16 by inserting a filter element 34 within the cylindrical cavity 18 for filtering transmission fluid. Also, a filter cover 26 that is coupled with an end of the filter element 34 is attached with a periphery of the cylindrical cavity 18 to form a fluid seal. The filter cover 26 includes an outlet aperture 30 fluidly connecting the filter element 34 to a relief valve 28 and to a hydraulic port 32 that are both integrated with an outer side of the filter cover 26. The relief valve 28 is configured to open when a fluid pressure from the hydraulic port 32 reaches a threshold and to close when the fluid pressure from the hydraulic port 32 is below the threshold.

According to yet another aspect of the present invention, a method of making an electrical motor 14 for a pumping apparatus 10 that circulates transmission fluid includes providing a motor housing 60 that has wire coils 130 and a rotor shaft 66 disposed within the motor housing 60. A rotor cover 36 is attached to a first section 62 of the motor housing 60. The rotor cover 36 has a bearing 152 integrally coupled with an interior side 154 of the rotor cover that rotatably couples with an end of the rotor shaft 66. A circuit board 38 is attached to an exterior side 146 of the rotor cover 36, and the circuit board 38 has a controller for operating the electrical motor 14. A protective cover 150 is sealably attached to the exterior side of the rotor cover 36 to protect the circuit board 38 from being exposed to transmission fluid.

It will be understood by one having ordinary skill in the art that construction of the described invention and other components is not limited to any specific material. Other exemplary embodiments of the invention disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

## Claims

1. A submersible pumping apparatus (10) for displacing transmission fluid, comprising:
a pump (12) operably coupled with a motor (14);
the submersible pumping apparatus (10) **characterized in that** it further comprises:
a filter housing (16) attached to the pump (12) and having a cavity (18) with an inlet aperture (20) extending to an exhaust port (22) of the pump (12);
a fluid filter (24) engaged with the cavity (18) and having a filter cover (26) with a relief valve(28) disposed within an outlet aperture (30) that extends from the cavity (18) to an exit port (32) on the filter cover (26); and
a rotor cover (36) attached to the motor (14) and having a circuit board (38) for operating the motor (14), wherein the rotor cover (36) is configured to prevent the circuit board (38) from being exposed to liquid.

2. The submersible pumping apparatus (10) of claim 1, further comprising:
a bearing (152) integrally coupled with an interior side (154) of the rotor cover (36) and rotatably engaged with an end of a rotor shaft (66) of the motor (14).

3. The submersible pumping apparatus (10) of claim 1, wherein the fluid filter (24) includes a filter element (34) disposed within the cavity (18) between the inlet aperture (20) on the filter housing (16) and the outlet aperture (30) on the filter cover (26) for filtering the displaced transmission fluid.

4. The submersible pumping apparatus (10) of claim 1, wherein the relief valve (28) is configured to open when a fluid pressure from the exit port (32) reaches a threshold and configured to close when the fluid pressure is below the threshold.

5. The submersible pumping apparatus (10) of claim 1, wherein the pump (12) comprises a positive displacement pump coupled with a rotor shaft of the motor (14).

6. The submersible pumping apparatus (10) of claim 1, wherein the relief valve (28) includes a spring loaded ball that is overcome to open the relief valve (28).

7. The submersible pumping apparatus (10) of claim 1, wherein the rotor cover (36) includes a terminal element (68) integrally extending within the rotor cover (36) and electrically connecting the circuit board (38) with an electric connection for receiving power and communication signals.

8. The submersible pumping apparatus (10) of claim 1, further comprising:
at least one elongated fastener (72) that extends through the pump (12) and the motor (14) to engage between the filter housing (16) and the rotor cover (36).

## Patentansprüche

1. Tauchfähige Pumpenvorrichtung (10) zum Verdrängen von Getriebefluid, umfassend:
eine betriebsmäßig mit einem Motor (14) gekoppelte Pumpe (12);
wobei die tauchfähige Pumpenvorrichtung (10) **dadurch gekennzeichnet ist, dass** sie ferner umfasst:
ein Filtergehäuse (16), welches an der Pumpe (12) angebracht ist und einen Hohlraum (18) mit einer Einlassöffnung (20) aufweist, welche sich zu einem Auslassanschluss (22) der Pumpe (12) erstreckt;
einen Fluidfilter (24), welcher mit dem Hohlraum (18) eingreift und eine Filterabdeckung (16) mit einem Entlastungsventil (28) aufweist, angeordnet innerhalb einer Auslassöffnung (30), welche sich von dem Hohlraum (18) zu einem Ausgangsanschluss (32) an der Filterabdeckung (26) erstreckt; und
eine Rotorabdeckung (36), welche an dem Motor (14) angebracht ist und eine Schaltungsplatine (38) zum Betreiben des Motors (14) aufweist, wobei die Rotorabdeckung (36) dazu eingerichtet ist, die Schaltungsplatine (38) daran zu hindern, Flüssigkeit ausgesetzt zu sein.

2. Tauchfähige Pumpenvorrichtung (10) nach Anspruch 1, ferner umfassend:
ein Lager (152), welches integral mit einer inneren Seite (154) der Rotorabdeckung (36) gekoppelt ist und rotierbar mit einem Ende einer Rotorwelle (66) des Motors (14) eingreift.

3. Tauchfähige Pumpenvorrichtung (10) nach Anspruch 1, wobei der Fluidfilter (24) ein Filterelement (34) umfasst, welches innerhalb des Hohlraums (18) zwischen der Einlassöffnung (20) an dem Filtergehäuse (16) und der Auslassöffnung (30) an der Filterabdeckung (26) zum Filtern des verdrängten Getriebefluids angeordnet ist.

4. Tauchfähige Pumpenvorrichtung (10) nach Anspruch 1, wobei das Entlastungsventil (28) dazu eingerichtet ist, zu öffnen, wenn ein Fluiddruck von dem Ausgangsanschluss (32) einen Schwellenwert erreicht, und dazu eingerichtet ist, zu schließen, wenn der Fluiddruck unterhalb des Schwellenwerts ist.

5. Tauchfähige Pumpenvorrichtung (10) nach Anspruch 1, wobei die Pumpe (12) eine Pumpe mit positiver Verdrängung gekoppelt mit einer Motorwelle des Motors (14) umfasst.

6. Tauchfähige Pumpenvorrichtung (10) nach Anspruch 1, wobei das Entlastungsventil (28) eine federvorbelastete Kugel umfasst, welche überwunden wird, um das Entlastungsventil (28) zu öffnen.

7. Tauchfähige Pumpenvorrichtung (10) nach Anspruch 1, wobei die Rotorabdeckung (36) ein Anschlusselement (68) umfasst, welches sich integral innerhalb der Rotorabdeckung (36) erstreckt und die Schaltungsplatine (38) mit einer elektrischen Verbindung zum Empfangen von Leistung und Kommunikationssignalen elektrisch verbindet.

8. Tauchfähige Pumpenvorrichtung (10) nach Anspruch 1, ferner umfassend: wenigstens ein längliches Befestigungselement (72), welches sich durch die Pumpe (12) und den Motor (14) erstreckt, um zwischen dem Filtergehäuse (16) und der Rotorabdeckung (36) einzugreifen.

## Revendications

1. Appareil de pompage submersible (10) pour déplacer un fluide de transmission, comprenant :
une pompe (12) couplée fonctionnellement à un moteur (14) ;
l'appareil de pompage submersible (10) étant **caractérisé en ce qu'**il comprend en outre :
un boîtier de filtre (16) fixé à la pompe (12) et ayant une cavité (18) avec une ouverture d'entrée (20) s'étendant vers un orifice d'échappement (22) de la pompe (12) ;
un filtre de fluide (24) en prise avec la cavité (18) et ayant un couvercle de filtre (26) avec une soupape de décharge (28) disposée à l'intérieur d'une ouverture de sortie (30) qui s'étend de la cavité (18) à un orifice de sortie (32) sur le couvercle de filtre (26) ; et
un couvercle de rotor (36) fixé au moteur (14) et ayant une carte de circuit imprimé (38) pour faire fonctionner le moteur (14), où le couvercle de rotor (36) est configuré pour empêcher la carte de circuit imprimé (38) d'être exposée à un liquide.

2. Appareil de pompage submersible (10) de la revendication 1, comprenant en outre :
un palier (152) couplé d'un seul tenant avec un côté intérieur (154) du couvercle de rotor (36) et en prise en rotation avec une extrémité d'un arbre de rotor (66) du moteur (14).

3. Appareil de pompage submersible (10) de la revendication 1, dans lequel le filtre de fluide (24) comporte un élément filtrant (34) disposé à l'intérieur de la cavité (18) entre l'ouverture d'entrée (20) sur le boîtier de filtre (16) et l'ouverture de sortie (30) sur le couvercle de filtre (26) pour filtrer le fluide de transmission déplacé.

4. Appareil de pompage submersible (10) de la revendication 1, dans lequel la soupape de décharge (28) est configurée pour s'ouvrir lorsqu'une pression de fluide provenant de l'orifice de sortie (32) atteint un seuil et configurée pour se fermer lorsque la pression de fluide est inférieure au seuil.

5. Appareil de pompage submersible (10) de la revendication 1, dans lequel la pompe (12) comprend une pompe volumétrique couplée à un arbre de rotor du moteur (14) .

6. Appareil de pompage submersible (10) de la revendication 1, dans lequel la soupape de décharge (28) comporte une bille à ressort qui est contrecarrée pour ouvrir la soupape de décharge (28).

7. Appareil de pompage submersible (10) de la revendication 1, dans lequel le couvercle de rotor (36) comporte un élément terminal (68) s'étendant d'un seul tenant à l'intérieur du couvercle de rotor (36) et reliant électriquement la carte de circuit imprimé (38) avec une connexion électrique pour recevoir des signaux d'alimentation et de communication.

8. Appareil de pompage submersible (10) de la revendication 1, comprenant en outre :
au moins un élément de fixation allongé (72) qui s'étend à travers la pompe (12) et le moteur (14) pour mise en prise entre le boîtier de filtre (16) et le couvercle de rotor (36).
